# EUROPEAN PATENT APPLICATION

(11) **EP 4 137 734 A1**
(43) Date of publication of application: **22.02.2023**
(21) Application number: 21788205.9
(22) Date of filing: 13.04.2021
(51) Int. Cl.: F16M 13/02, F16M 11/10

(54) **FIXING DEVICE**

(30) Priority: 13.04.2020 CN 202020531440 U
(71) Applicant: ZTE Corporation, Shenzhen, Guangdong 518057 (CN)
(72) Inventor: LEI, Yanfeng, Shenzhen, Guangdong 518057 (CN); JIANG, Wenbing, Shenzhen, Guangdong 518057 (CN); QIAN, Dongjin, Shenzhen, Guangdong 518057 (CN)
(74) Representative: Ipsilon
(86) International application number: PCT/CN2021/086842
(87) International publication number: WO 2021/208891

(57) **Abstract**

Disclosed is a fixture for fixing a device on a base object, the fixture including a fixed member (4), a movable member (5) and an angle adjusting assembly (6). The fixed member (4) is configured to be fixedly connected to the base object; the movable member (5) is configured to be fixedly connected to the device; and the movable member (5) is rotatably connected to the fixed member (4) by the angle adjusting assembly (6), and the angle adjusting assembly (6) is configured to be movable to a first position where the movable member (5) is rotated to any angle relative to the fixed member (4), and to a second position where the movable member (5) is fixed at the any angle.

## Description

### TECHNICALFIELD

Embodiments of the present disclosure relate to the technical field of device mounting, and in particular, to a fixture for mounting a device.

### BACKGROUND

A household terminal product, such as a camera, a projector or a display, is typically used in scenarios including a living room, a bedroom, or the like, and connected to the network in a wired or wireless manner to realize corresponding functions. According to different requirements, some household terminal products are placed on a table top, and some need to be hung on a wall or a ceiling. However, the current fixtures for hanging a camera, a projector, a display or the like on a wall typically have a fixed angle that cannot be adjusted, bringing inconvenience in use.

### SUMMARY

To solve at least one of the technical problems in the related art, embodiments of the present disclosure provide a fixture. The fixture according to the embodiments of the present disclosure has the advantages of easy operation, reliable positioning, as well as a long service life and resistance to damage.

To achieve the above object, an embodiment of the present disclosure provides a fixture for fixing a device on a base object. The fixture includes a fixed member, a movable member and an angle adjusting assembly, wherein the fixed member is configured to be fixedly connected to the base object; the movable member is configured to be fixedly connected to the device; the movable member is rotatably connected to the fixed member by the angle adjusting assembly, and the angle adjusting assembly is configured to be movable to a first position where the movable member is rotatable to any angle relative to the fixed member, and to a second position where the movable member is fixed at the any angle.

In an embodiment, the angle adjusting assembly includes a pivot, a first limit structure on the pivot, and a second limit structure on the movable member, wherein the pivot is rotatably connected to the movable member and movably connected to the fixed member, and is movable between the second position and the first position along an axial direction of the pivot; and the first limit structure and the second limit structure are separated when the pivot is moved to the first position so that the movable member is rotatable to any angle about the pivot, and the first limit structure and the second limit structure cooperate with each other when the pivot is moved to the second position so that the movable member is fixed at the any angle.

In an embodiment, the angle adjusting assembly further includes an elastic member which is elastically deformed when an external force is applied on the pivot, and which applies, when the external force is removed, an elastic force on the pivot to make the pivot return to the second position.

In an embodiment, a first pivot hole is provided on the movable member, and a second pivot hole and a third pivot hole are provided on the fixed member; the first pivot hole, the second pivot hole and the third pivot hole are coaxially arranged, and the first pivot hole is located between the second pivot hole and the third pivot hole; the pivot penetrates through the first pivot hole, the second pivot hole and the third pivot hole; the first limit structure is provided on an outer peripheral wall of the pivot; and the second limit structure is provided on a wall of the first pivot hole.

In an embodiment, the first limit structure includes a first boss on the outer peripheral wall of the pivot, the second limit structure includes a second boss on the wall of the first pivot hole, and a first tooth portion and a second tooth portion are provided on two opposite end faces of the first boss and the second boss, respectively, wherein the first tooth portion and the second tooth portion are separated when the pivot is moved to the first position, and engaged with each other when the pivot is moved to the second position.

In an embodiment, the angle adjusting assembly further includes an end cap and an elastic member including a compression spring; the end cap is disposed on the fixed member and opposite to a first end face of the pivot in the second pivot hole; and the compression spring is provided in the second pivot hole and located between the end cap and the first end face, and is configured to generate compression deformation when an external force is applied on the pivot, and to apply, when the external force is removed, an elastic force on the pivot to make the pivot return to the second position.

In an embodiment, a portion of the pivot remote from the first end face extends out of the third pivot hole to bear the external force.

In an embodiment, the angle adjusting assembly further includes a rotatable handle, the rotatable handle is rotatably connected to the portion of the pivot remote from the first end face, the rotatable handle is provided with a first surface and a second surface which form an angle, and is configured such that when the rotatable handle is rotated to a first angle, the first surface is abutted against an end face of the third pivot hole to drive the pivot to move to the first position; and when the rotatable handle is rotated to a second angle, the second surface is abutted against an end face of the third pivot hole to drive the pivot to move to the second position.

In an embodiment, the angle adjusting assembly further includes a first positioning structure on the pivot, and a second positioning structure in the second pivot hole and/or the third pivot hole, wherein the first positioning structure and the second positioning structure cooperate with each other to define a degree of rotational freedom of the pivot.

In an embodiment, the movable member is provided with a screw mounting hole configured to enable the fixed member to be mounted on the base object by a screw.

In the fixture according to the embodiments of the present disclosure, the movable member can be rotatably connected to the fixed member by means of the angle adjusting assembly. The angle adjusting assembly is configured to be movable to a first position where the movable member is rotatable to any angle relative to the fixed member, and to a second position where the movable member is fixed at the any angle. The movable member can be switched between a position adjustable state and a position fixed state, as long as the angle adjusting assembly is movable between the first position and the second position. Therefore, the fixture according to the embodiments of the present disclosure has the advantages of easy operation, reliable positioning, as well as a long service life and resistance to damage.

### BRIEF DESCRIPTION OF DRAWINGS

FIG. 1 is a schematic structural diagram of a fixture in the related art;
FIG. 2A is an overall view of a fixture according to an embodiment of the present disclosure;
FIG. 2B is an exploded view of an angle adjusting assembly of the fixture according to an embodiment of the present disclosure;
FIG. 3 is a schematic structural diagram of a fixed member used in an embodiment of the present disclosure;
FIG. 4A is a schematic front structural view of a movable member used in an embodiment of the present disclosure;
FIG. 4B is a schematic side structural view of a movable member used in an embodiment of the present disclosure;
FIG. 5 is a schematic structural diagram of a pivot used in an embodiment of the present disclosure;
FIG. 6A is a partial sectional view of a fixture according to an embodiment of the present disclosure in one state;
FIG. 6B is a partial sectional view of a fixture according to an embodiment of the present disclosure in another state;
FIG. 7A is a schematic structural diagram of a rotatable handle used in an embodiment of the present disclosure in one state; and
FIG. 7B is a schematic structural diagram of a rotatable handle used in an embodiment of the present disclosure in another state.

### DETAIL DESCRIPTION OF EMBODIMENTS

To improve understanding of the technical solution of the present disclosure for those skilled in the art, the fixture of the present disclosure will be described below in detail in conjunction with the accompanying drawings.

The fixture according to the embodiments of the present disclosure can be configured to fix a device, such as a camera, a projector, a display or the like, on a base object. The base object includes a wall, a ceiling, or the like.

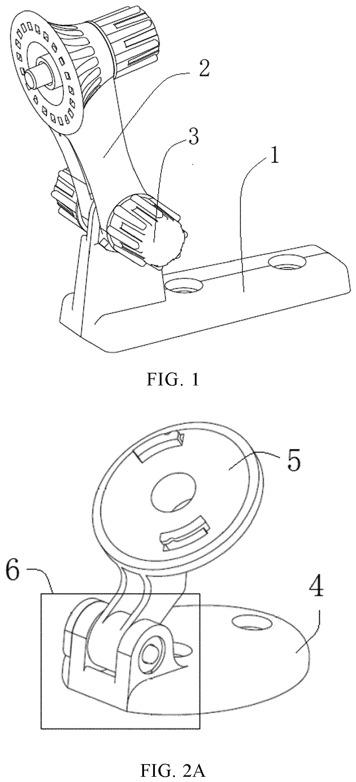

In an embodiment, as shown in FIG. 1, there is provided a fixture, including a mount 1 and a bracket 2. The bracket 2 is rotatably connected to the mount 1 and has a device, such as a camera, mounted thereon. After an angle of the bracket 2 is adjusted, relative positions of the mount 1 and the bracket 2 are locked by a nut 3 so that the bracket 2 is fixed at the adjusted angle.

In the above fixture, the nut 3 needs to be loosened and locked time and again to further adjust the angle of the bracket 2. This adjusting method not only is time-consuming and labor-consuming, but also sometimes involves use of tools such as a wrench, bringing inconvenience to the operation and tending to shorten a service life and cause failure of the nut 3 due to the repeated loosening and locking.

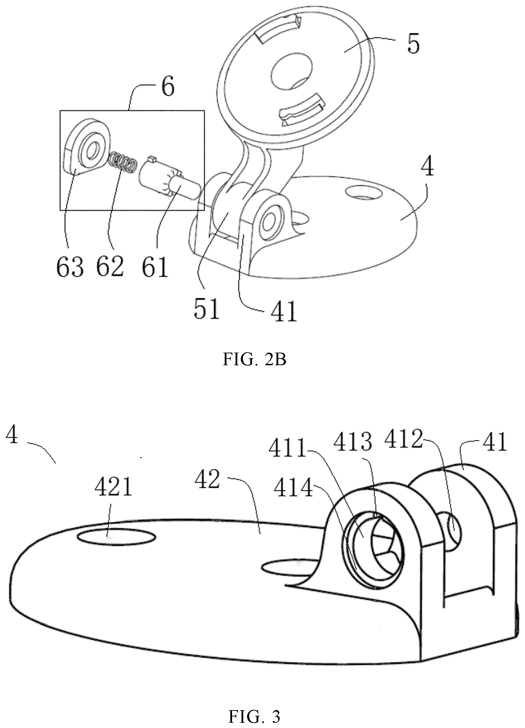

Referring to FIG. 2A, a fixture according to an embodiment of the present disclosure includes a fixed member 4, a movable member 5 and an angle adjusting assembly 6. The fixed member 4 is configured to be fixedly connected to a base object (not shown). The fixed member 4 can be connected to the base object in various ways. For example, as shown in FIG. 3, the fixed member 4 includes a lower cap body 42, and a screw hole 421 provided in the lower cap body 42 such that the lower cap body 42 can be mounted on a base object such as a wall or a ceiling by a screw. In practical applications, the size and shape of the fixed member 4 and the number and arrangement mode of the screw holes 421 can be set freely according to the specific requirements.

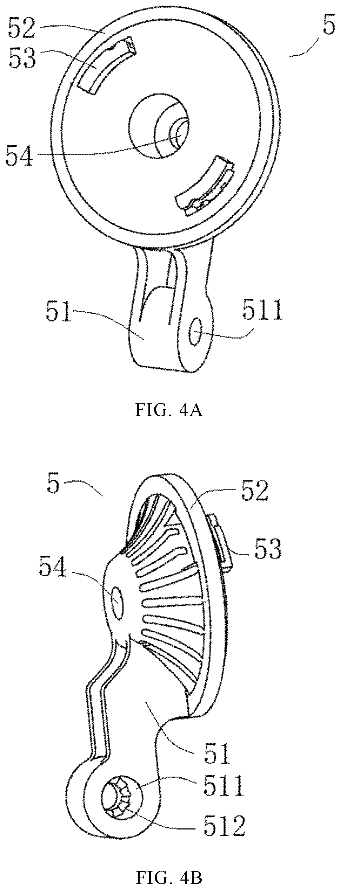

The movable member 5 is configured to be fixedly connected to the device, such as a camera, a projector, a display, or the like. The shape and size of the movable member 5 can be specifically designed for different shapes of devices. For example, as shown in FIGs. 4A and 4B, the movable member 5 includes an upper cap body 52. A catch 53 is provided on a mounting surface of the upper cap body 52 to connect the upper cap body 52 to the device in a snap-fit manner. In practical applications, obviously, the upper cap body 52 can be connected to the device by any other means, such as by a screw or by detachable connection.

In an exemplary embodiment, the upper cap body 52 is provided with a screw mounting hole 54 configured to enable the upper cap body 52 to be mounted on the base object by a screw. By means of the arrangement of the screw mounting hole 54, the upper cap body 52 can be directly mounted on the base object, which can increase the mounting modes, improve the mounting flexibility, and satisfy mounting requirements of different devices.

In this embodiment, as shown in FIG. 2B, the fixed member 4 further includes a first bracket 41, and the movable member 5 further includes a second bracket 51. In this embodiment, the first bracket 41 is connected to the lower cap body 42 and has two first support parts disposed oppositely; and the second bracket 51 is connected to the upper cap body 52 and has a second support part disposed between the two first support parts.

The angle adjusting assembly 6 rotatably connects the movable member 5 to the fixed member 4, and is configured to be movable to a first position where the movable member 5 is rotated to any angle relative to the fixed member 4. In a second position, the angle adjusting assembly 6 enables the movable member 5 to be fixed at the any angle. The movable member 5 can be switched between a position adjustable state and a position fixed state, as long as the angle adjusting assembly 6 is movable between the first position and the second position. In this manner, the fixture according to this embodiment has the advantages of easy operation, reliable positioning, as well as a long service life and resistance to damage.

Detailed description of specific implementations of the angle adjusting assembly 6 is provided below. Specifically, as shown in FIG. 2B, the angle adjusting assembly 6 includes a pivot 61, a first limit structure on the pivot 61, and a second limit structure on the movable member 5. The pivot 61 is rotatably connected to the movable member 5 and movably connected to the fixed member 4. In an exemplary embodiment, the pivot 61 penetrates through the two first support parts and the second support part to connect the fixed member 4 to the movable member 5.

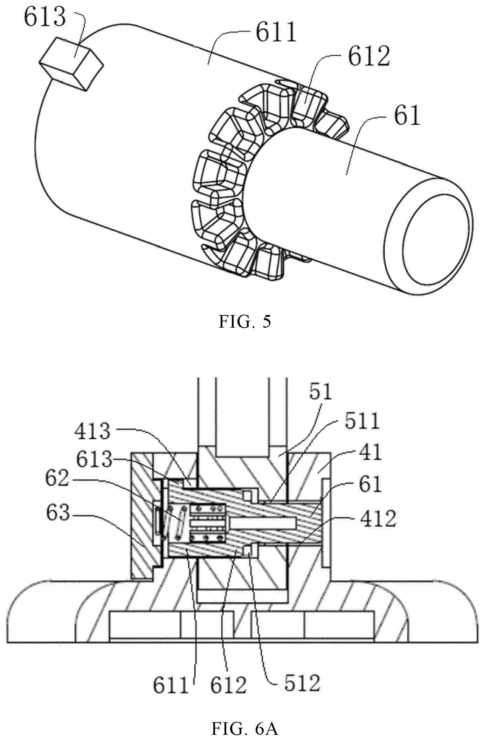

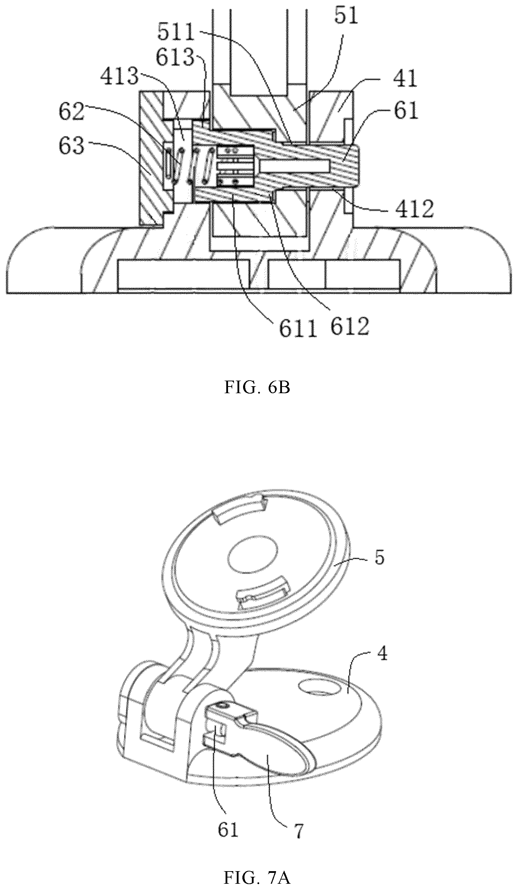

As shown in FIG. 4B, a first pivot hole 511 is provided in the second support part of the second bracket 51; and as shown in FIG. 3, a second pivot hole 411 and a third pivot hole 412 are provided in the two first support parts of the first bracket 41, respectively. As shown in FIGs. 6A and 6B, the first pivot hole 511, the second pivot hole 411 and the third pivot hole 412 are coaxially arranged, and the first pivot hole 511 is located between the second pivot hole 411 and the third pivot hole 412; and the pivot 61 penetrates through the first pivot hole 511, the second pivot hole 411 and the third pivot hole 412.

Further, the pivot 6 is movable between the second position and the first position along an axial direction of the pivot 61. That is, the pivot 61 is movable in the first pivot hole 511, the second pivot hole 411, and the third pivot hole 412. The first limit structure and the second limit structure are separated when the pivot 61 is moved to the first position so that the movable member 5 is rotatable to any angle about the pivot 61. The first limit structure and the second limit structure cooperate with each other when the pivot 61 is moved to the second position so that the movable member 5 is fixed at the any angle.

In this embodiment, the first limit structure is provided on an outer peripheral wall of the pivot 61, and the second limit structure is provided on a wall of the first pivot hole 511. The first limit structure and the second limit structure can cooperate with each other in various ways. For example, as shown in FIG. 5, the first limit structure includes a first boss 611 provided on the outer peripheral wall of the pivot 61. As shown in FIG. 4B, the second limit structure includes a second boss on the wall of the first pivot hole 511, and a first tooth portion 512 and a second tooth portion 612 are provided on two opposite end faces of the first boss 611 and the second boss, respectively. The first tooth portion 512 and the second tooth portion 612 are separated when the pivot 61 is moved to the first position, as shown in FIG. 6A, and engaged with each other when the pivot 61 is moved to the second position, as shown in FIG. 6B.

As shown in FIG. 6A, when the first tooth portion 512 and the second tooth portion 612 are separated, the second bracket 51 can be rotated to any angle about the pivot 61. As shown in FIG. 6B, when the first tooth portion 512 and the second tooth portion 612 are engaged, a degree of rotational freedom of the second bracket 51 is limited and thus is fixed relative to the pivot 61. It is easy to understand that the angular accuracy of the second bracket 51 in a circumferential direction of the pivot 61 depends on the number of teeth of the first tooth portion 512 and the second tooth portion 612, and the more teeth are provided, the higher the angular accuracy will be.

In this embodiment, as shown in FIG. 2B, the angle adjusting assembly 6 further includes an elastic member 62 which is elastically deformed when an external force is applied on the pivot 61, and which applies, when the external force is removed, an elastic force on the pivot 61 to make the pivot 61 return to the second position shown in FIG. 6B. By means of the elastic member 62, automatic reset of the pivot 61 can be realized. Therefore, to adjust the angle of the movable member 5, an external force can be applied on the pivot 61; and when the adjustment is completed, the movable member 5 can be fixed at the adjusted angle simply by releasing the external force, thereby further simplifying the adjustment.

The elastic member 62 can have various structures, such as a compression spring. Further, as shown in FIGs. 6A and 6B, the angle adjusting means 6 further includes an end cap 63. The end cap 63 is disposed on the fixed member 4 and opposite to a first end face (the left end face of the pivot 61 shown in FIGs. 6A and 6B) of the pivot 61 in the second pivot hole 411. In addition, the compression spring is provided in the second pivot hole 411 and located between the end cap 63 and the first end face, and is configured to generate compression deformation when an external force is applied on the pivot 61, and to apply, when the external force is removed, an elastic force on the pivot 61 to make the pivot return to the second position.

As shown in FIG. 6B, a portion (at the right end of the pivot 61 shown in FIG. 6B) of the pivot 61 remote from the first end face extends from the third pivot hole 412 to bear the external force. Specifically, when no external force is applied on the pivot 61, the pivot 61 is in the second position as shown in FIG. 6B; when the extended portion of the pivot 61 is pressed, the pivot 61 is moved from the second position to the first position as shown in FIG. 6A; and when the press is released, the pivot 61 automatically returns to the second position under an action of the compression spring.

In addition, in order to limit the position of the end cap 63, a step structure 414 is further provided in the second pivot hole 411.

In practical applications, the end cap 63 can be fixed to the fixed member 4 by various methods, such as by adhesion, screws, ultrasonic welding, catches, etc.

As shown in FIG. 5, the angle adjusting assembly 6 further includes a first positioning structure 613 on the pivot 61, and a second positioning structure 413 in the second pivot hole 411. The first positioning structure 613 and the second positioning structure 413 cooperate with each other to define a degree of rotational freedom of the pivot 61 and thus achieve relative fixing of the pivot 61 to the fixed member 4. The first positioning structure 613 and the second positioning structure 413 can cooperate with each other in various ways. For example, the first positioning structure 613 and the second positioning structure 413 are a convex portion on the outer peripheral wall of the pivot 61 and a concave portion in the second pivot hole 411, respectively, and the convex portion is fitted with the concave portion. In practical applications, obviously, the second positioning structure 413 can be disposed in the third pivot hole 412, or in both the second pivot hole 411 and the third pivot hole 412.

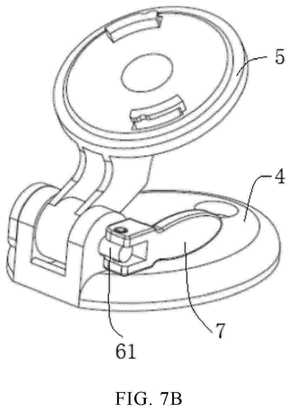

As shown in FIGs. 7A and 7B, the angle adjusting assembly 6 further includes a rotatable handle 7. The rotatable handle 7 is rotatably connected to the portion (i.e., the extended portion) of the pivot 61 remote from the first end face. The rotatable handle 7 has a first surface and a second surface which form an angle, and is configured such that when the rotatable handle 7 is rotated to a first angle as shown in 7A, the first surface is abutted against an end face of the third pivot hole 412 to drive the pivot 61 to move to the first position as shown in FIG. 6A; and when the rotatable handle 7 is rotated to a second angle as shown in 7B, the second surface is abutted against the end face of the third pivot hole 412to drive the pivot 61 to move to the second position as shown in FIG. 6B. The rotatable handle 7 can bring more convenience to the operation. In practical applications, obviously, the rotatable handle 7 can adopt any other structure, as long as the pivot 61 can be moved.

To sum up, in the fixture according to the embodiments of the present disclosure, the movable member can be rotatably connected to the fixed member by means of the angle adjusting assembly. The angle adjusting assembly is configured to be movable to a first position where the movable member is rotatable to any angle relative to the fixed member, and to a second position where the movable member is fixed at the any angle. The movable member can be switched between a position adjustable state and a position fixed state, as long as the angle adjusting assembly is movable between the first position and the second position. Therefore, the fixture according to the embodiments of the present disclosure has the advantages of easy operation, reliable positioning, as well as a long service life and resistance to damage.

It will be appreciated that the above implementations are merely exemplary implementations for the purpose of illustrating the principle of the present disclosure, and the present disclosure is not limited thereto. It will be apparent to one of ordinary skill in the art that various modifications and variations can be made without departing from the spirit or essence of the present disclosure. Such modifications and variations should also be considered as falling into the protection scope of the present disclosure.

## Claims

1. A fixture for fixing a device on a base object, the fixture comprising a fixed member, a movable member and an angle adjusting assembly, wherein
the fixed member is configured to be fixedly connected to the base object;
the movable member is configured to be fixedly connected to the device; and
the movable member is rotatably connected to the fixed member by the angle adjusting assembly, and the angle adjusting assembly is configured to be movable to a first position where the movable member is rotatable to any angle relative to the fixed member, and to a second position where the movable member is fixed at the any angle.

2. The fixture according to claim 1, wherein the angle adjusting assembly comprises a pivot, a first limit structure on the pivot, and a second limit structure on the movable member, wherein
the pivot is rotatably connected to the movable member and movably connected to the fixed member, and is movable between the second position and the first position along an axial direction of the pivot; and
the first limit structure and the second limit structure are separated in response to the pivot moved to the first position so that the movable member is rotatable to any angle about the pivot, and the first limit structure and the second limit structure cooperate with each other in response to the pivot moved to the second position so that the movable member is fixed at the any angle.

3. The fixture according to claim 2, wherein the angle adjusting assembly further comprises an elastic member which is elastically deformed in response to an external force applied on the pivot, and which applies, in response to the external force removed, an elastic force on the pivot to make the pivot return to the second position.

4. The fixture according to claim 2 or 3, wherein a first pivot hole is provided on the movable member, and a second pivot hole and a third pivot hole are provided on the fixed member;
the first pivot hole, the second pivot hole and the third pivot hole are coaxially arranged, and the first pivot hole is located between the second pivot hole and the third pivot hole;
the pivot penetrates through the first pivot hole, the second pivot hole and the third pivot hole;
the first limit structure is provided on an outer peripheral wall of the pivot; and
the second limit structure is provided on a wall of the first pivot hole.

5. The fixture according to claim 4, wherein the first limit structure comprises a first boss on the outer peripheral wall of the pivot, the second limit structure comprises a second boss on the wall of the first pivot hole, and a first tooth portion and a second tooth portion are provided on two opposite end faces of the first boss and the second boss, respectively, wherein the first tooth portion and the second tooth portion are separated in response to the pivot moved to the first position, and engaged with each other in response to the pivot moved to the second position.

6. The fixture according to claim 4, wherein the angle adjusting assembly further comprises an end cap and an elastic member including a compression spring;
the end cap is disposed on the fixed member and opposite to a first end face of the pivot in the second pivot hole; and
the compression spring is provided in the second pivot hole and located between the end cap and the first end face, and is configured to generate compression deformation in response to an external force applied on the pivot, and to apply, in response to the external force removed, an elastic force on the pivot to make the pivot return to the second position.

7. The fixture according to claim 6, wherein a portion of the pivot remote from the first end face extends out of the third pivot hole to bear the external force.

8. The fixture according to claim 7, wherein the angle adjusting assembly further comprises a rotatable handle,
the rotatable handle is rotatably connected to the portion of the pivot remote from the first end face,
the rotatable handle is provided with a first surface and a second surface which form an angle, and is configured such that in response to the rotatable handle rotated to a first angle, the first surface is abutted against an end face of the third pivot hole to drive the pivot to move to the first position; and in response to the rotatable handle rotated to a second angle, the second surface is abutted against an end face of the third pivot hole to drive the pivot to move to the second position.

9. The fixture according to claim 4, wherein the angle adjusting assembly further comprises a first positioning structure on the pivot, and a second positioning structure in the second pivot hole and/or the third pivot hole, wherein the first positioning structure and the second positioning structure cooperate with each other to define a degree of rotational freedom of the pivot.

10. The fixture according to claim 1, wherein the movable member is provided with a screw mounting hole configured to enable the fixed member to be mounted on the base object by a screw.
